(19) Europäisches Patentamt / European Patent Office / Office européen des brevets

(11) **EP 3 323 852 A1**

(12) **EUROPEAN PATENT APPLICATION**
published in accordance with Art. 153(4) EPC

(43) Date of publication:
**23.05.2018 Bulletin 2018/21**

(51) Int Cl.:
**C08L 23/22** (2006.01)  **C08L 23/28** (2006.01)
**C08L 23/34** (2006.01)  **F16L 11/04** (2006.01)

(21) Application number: **16824315.2**

(22) Date of filing: **04.07.2016**

(86) International application number:
**PCT/JP2016/069817**

(87) International publication number:
**WO 2017/010335 (19.01.2017 Gazette 2017/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **16.07.2015 JP 2015142308**

(71) Applicant: **The Yokohama Rubber Co., Ltd.**
**Tokyo 105-8685 (JP)**

(72) Inventor: **SATO Aya**
**Hiratsuka City**
**Kanagawa 254-8601 (JP)**

(74) Representative: **Grünecker Patent- und Rechtsanwälte**
**PartG mbB**
**Leopoldstraße 4**
**80802 München (DE)**

(54) **RUBBER COMPOSITION AND REFRIGERANT-TRANSPORTING HOSE**

(57) An object of the present invention is to provide a rubber composition and refrigerant-transporting hose with superior refrigerant permeation resistance. Provided are a rubber composition containing: a rubber component including at least one selected from the group consisting of chlorosulfonated polyethylene rubber, butyl rubber, and chlorinated polyethylene rubber; and liquid butyl rubber, and being used to manufacture a refrigerant-transporting hose; and a refrigerant transport hose fabricated using the same.

FIG. 1

EP 3 323 852 A1

**Description**

Technical Field

The present invention relates to a rubber composition and a refrigerant-transporting hose.

Background Art

Hoses for passing refrigerants such as fluorine-based compounds (i.e., refrigerant-transporting hoses) are conventionally used in automobile engine bays.

Recently, there has been a demand for a refrigerant-transporting hose including tube rubber in an inner tube thereof in order to suppress noise from the engine bay caused by engine vibration.

Rubber layer materials containing, for example, butyl rubber or the like have been proposed as rubber compositions for use in inner tubes (for example, see Patent Document 1).

Citation List

Patent Literature

  Patent Document 1: JP 2006-29443 A

Summary of Invention

Technical Problem

A preparation and evaluation of rubber compositions containing butyl rubber and liquid polybutene performed by the inventor of the present invention on the basis of Patent Document 1 revealed that such rubber compositions have low refrigerant permeation resistance.

Thus, an object of the present invention is to provide a rubber composition with superior refrigerant permeation resistance.

Another object of the present invention is to provide a refrigerant-transporting hose of superior refrigerant permeation resistance.

Solution to Problem

As the result of dedicated research toward solving the problem described above, the inventor discovered that the prescribed effects can be obtained by including liquid butyl rubber, thereby arriving at the present invention.

The present invention is based on this discovery, and, specifically, solves the problem described above by the following features.

  1. A rubber composition containing: a rubber component including at least one selected from the group consisting of chlorosulfonated polyethylene rubber, butyl rubber, and chlorinated polyethylene rubber; and liquid butyl rubber; the composition being used to manufacture a refrigerant-transporting hose.

  2. The rubber composition according to 1, wherein the liquid butyl rubber has a weight average molecular weight of 1000 to 50000.

  3. The rubber composition according to 1 or 2, wherein the liquid butyl rubber has a viscosity at 90°C of 10000 to 600000 cP.

  4. The rubber composition according to any one of 1 to 3, wherein a liquid butyl rubber content is 1 to 30 parts by mass per 100 parts by mass of the rubber component.

  5. The rubber composition according to any of 1 to 4, wherein the refrigerant includes at least a fluorine-based compound.

  6. A refrigerant-transporting hose fabricated (manufactured) using the rubber composition according to any one of 1 to 5.

Advantageous Effects of Invention

The rubber composition and refrigerant-transporting hose of the present invention have superior refrigerant permeation resistance.

Brief Description of Drawings

FIG. 1 is a perspective view illustrating a cut-away of the layers of one example of a refrigerant-transporting hose according to the present invention.
FIG. 2 is a cross-sectional view of an evaluation cup used to evaluate the refrigerant permeation resistance of the rubber composition according to the present invention.

Description of Embodiments

Embodiments of the present invention are described in detail below.
In the present description, numerical ranges indicated using "(from)... to..." include the former number as the lower limit value and the later number as the upper limit value.
In the present description, when a component contains two or more types of substances, the content of said component is the total content of the two or more types of substances.

Rubber composition

The rubber composition according to the present invention is a rubber composition containing: a rubber component including at least one selected from the group consisting of chlorosulfonated polyethylene rubber, butyl rubber, and chlorinated polyethylene rubber; and liquid butyl rubber; the composition being used to manufacture a refrigerant-transporting hose.
The rubber composition according to the present invention is thought to yield the desired effects as a result of having such features. While the reasons for this are unclear, it is presumed that the inclusion of crosslinkable liquid butyl rubber in the rubber composition according to the present invention increases the crosslink density of the obtained rubber, thereby yielding superior refrigerant permeation resistance.
The components contained in the rubber composition of the present invention will be described in detail below.

Rubber component

The rubber component contained in the rubber composition according to the present invention includes at least one selected from the group consisting of chlorosulfonated polyethylene rubber, butyl rubber, and chlorinated polyethylene rubber. In the present invention, butyl rubber excludes liquid butyl rubber.
There is no particular limitation on the chlorosulfonated polyethylene rubber (CSM). Examples thereof include conventionally known chlorosulfonated polyethylene rubber.
There is no particular limitation on the chlorinated polyethylene rubber (CM). Examples thereof include conventionally known chlorinated polyethylene rubber.
There is no particular limitation on the butyl rubber (IIR). Examples thereof include conventionally known butyl rubber.
An example of a preferable aspect is one in which the butyl rubber is solid at 23°C.
For the sake of obtaining superior effects of the present invention (refrigerant permeation resistance) and superior workability of the unvulcanized rubber composition, the butyl rubber preferably has a weight average molecular weight of greater than 50000 up to 2500000.
In the present invention, the weight average molecular weight of the butyl rubber is a polystyrene standard value calculated on the basis of a value measured via gel permeation chromatography (GPC) using tetrahydrofuran (THF) as a solvent.
An example of a preferred aspect is one in which the rubber component includes at least butyl rubber. The rubber component may be entirely butyl rubber.
An example of a combination for the rubber component include a combination containing butyl rubber and at least one selected from the group consisting of chlorosulfonated polyethylene rubber and chlorinated polyethylene rubber.
The butyl rubber content is preferably 50 to 100 mass% with respect to the total mass of the rubber component.

Liquid butyl rubber

There is no particular limitation on the liquid butyl rubber contained in the rubber composition according to the present invention as long as it is butyl rubber that is viscous at 23°C.

For the sake of obtaining superior effects of the present invention, the weight average molecular weight of the liquid butyl rubber is preferably 1000 to 50000, more preferably to 10000 to 45000.

In the present invention, the weight average molecular weight of the liquid butyl rubber is a value obtained by gel permeation chromatography (GPC) measured based on calibration with polystyrene standard using tetrahydrofuran as a solvent.

For the sake of obtaining superior effects of the present invention, the viscosity at 90°C of the liquid butyl rubber is preferably 10000 to 600000 cP, more preferably 10000 to 300000 cP.

In the present invention, the viscosity of the liquid butyl rubber is as measured using a Brookfield viscometer (type-B rotational viscometer at a rotational speed of 2.5 rpm and 90°C; produced by EKO Instruments; type-C viscometer; No. 3 spindle).

A single type or a combination of two or more types of liquid butyl rubber can be used.

For the sake of obtaining superior effects of the present invention and superior compression set resistance and vulcanization properties (e.g., modulus), the liquid butyl rubber content is preferably 1 to 30 parts by mass, more preferably 5 to 15 parts by mass, per 100 parts by mass of the rubber component.

Filler

An example of a preferable aspect is one in which the rubber composition according the present invention further contains a filler for the sake of obtaining superior effects of the present invention.

Examples of fillers include carbon black, silica, clay, talc, calcium carbonate, mica and diatomaceous earth.

Talc is especially preferable for the sake of obtaining superior effects of the present invention and superior refrigerant permeation resistance.

A single type or a combination of two or more types of filler can be used.

For the sake of obtaining superior effects of the present invention and superior compression set resistance, refrigerant permeation resistance, and modulus, the filler content is preferably 50 to 180 parts by mass, more preferably 70 to 150 parts by mass, per 100 parts by mass of the rubber component.

An example of a preferable aspect is one in which the rubber composition according to the present invention contains substantially no organic clay.

Organic clay means clay to which organic onium ions have been ionically bonded. There is no particular limitation on the organic onium ions. Examples include cations including at least one selected from the group consisting of nitrogen atoms, phosphorus atoms, sulfur atoms, and carbon atoms. Specific examples include $NH^{4+}$, phosphonium ions, sulfonium ions, and ammonium ions including a hydrocarbon group.

Containing substantially no organic clay means that the organic clay content is 0 to 0.1 mass% with respect to the total mass of the rubber composition.

Additives

The rubber composition of the present invention may further contain an additive, as necessary.

Examples of additives include rubber other than the rubber component, liquid rubber other than liquid butyl rubber, softeners such as paraffin oil, stearic acid, zinc oxide, anti-aging agents, antioxidants, antistatic agents, flame retardants, vulcanizing agents such as sulfur or resin vulcanizing agents, vulcanization accelerators, cross-linking agents such as peroxides, and adhesive aids.

There is no particular limitation on the additives. Examples thereof include conventionally known additives.

The additives can be added in suitable amounts.

In a case that the rubber composition according to the present invention further contains a resin vulcanizing agent, examples of the resin vulcanizing agent include an alkylphenol-formaldehyde resin and a brominated alkylphenol-formaldehyde resin.

The resin vulcanizing agent content is preferably 1 to 8 parts by mass, more preferably 2 to 6 parts by mass, per 100 parts by mass of the rubber component.

Production method, applications, etc.

There is no particular limitation on the method by which the rubber composition according to the present invention is produced. One example is a method in which the rubber component, liquid butyl rubber, and fillers and additives that can be added as necessary are kneaded at 30 to 150°C in a closed mixer such as a Banbury mixer or a kneader, or a kneading roll, to produce a rubber composition.

There is no particular limitation on the conditions under which the rubber composition according to the present invention is vulcanized or crosslinked. For example, the rubber composition according to the present invention can be vulcanized or crosslinked under pressure at 140 to 160°C.

The rubber composition according to the present invention can be used to manufacture (fabricate) a refrigerant-transporting hose. There is no particular limitation on the part of the refrigerant-transporting hose for which the rubber composition according to the present invention is used; an example of a preferable aspect is one in which the rubber composition according to the present invention is used to form an inner tube of the refrigerant-transporting hose.

There is no particular limitation on the refrigerant passed through the refrigerant-transporting hose. Examples include fluorine-based compounds. Specific examples include fluorine-based compounds including double bonds, such as 1,2,3,3,3-pentafluoropropene, 1,3,3,3-tetrafluoropropene, 2,3,3,3-tetrafluoropropene (structural formula: $CF_3$-$CF$=$CH_2$, HFO-1234yf), 1,2,3,3-tetrafluoropropene, and 3,3,3-trifluoropropene; and saturated hydroflurocarbons such as HFC-134a (structural formula: $CF_3$-$CFH_2$).

A single type or a combination of two or more types of refrigerant can be used.

Refrigerant-transporting hose

The refrigerant-transporting hose according to the present invention (hose according to the present invention) is a refrigerant-transporting hose manufactured using the rubber composition according to the present invention.

There is no particular limitation on the rubber composition used for the hose according to the present invention as long as it is the rubber composition of the present invention.

An example of the hose according to the present invention is a hose including an inner tube, a reinforcing layer, and an outer tube, in that order. Inner tube

The inner tube of the hose according to the present invention is preferably formed using the rubber composition according to the present invention.

The inner tube can have one or multiple layers.

In a case that the inner tube includes multiple layers, it is preferable that at least an innermost layer of the inner tube be formed using the rubber composition according to the present invention. An interlayer rubber layer or the like may be disposed between adjacent inner tubes.

An interlayer rubber layer or the like may be disposed between the inner tube and the reinforcing layer adjacent to the inner tube.

Reinforcing layer

There is no particular limitation on the reinforcing layer as long as it can be used in a hose.

Examples of the material used for the reinforcing layer includes fiber materials such as polyester fibers, polyamide fibers, aramid fibers, vinylon fibers, rayon fibers, polyparaphenylene benzobisoxazole fibers, polyketone fibers, and polyarylate fibers; and metal materials such as hard steel wire, such as brass-plated wire, and zinc-plated wire.

There is no particular limitation on the geometry of the reinforcing layer. Examples thereof include a braided shape and spiral shape.

A single type or a combination of two or more types of reinforcing layer material can be used.

The reinforcing layer may have one or multiple layers.

In a case that the reinforcing layer has multiple layers, an interlayer rubber layer or the like may be disposed between adjacent reinforcing layers.

Outer tube

There is no particular limitation on the rubber material constituting the outer tube. For example, a conventionally known rubber composition can be used. Specific examples include a styrene-butadiene rubber composition, a chloroprene rubber composition, and an ethylene-propylene diene rubber composition.

The outer tube may have one or multiple layers.

In a case that the outer tube has multiple layers, an interlayer rubber layer or the like may be disposed between adjacent outer tube layers.

An interlayer rubber layer or the like may be disposed between the outer tube and the reinforcing layer adjacent to the outer tube.

The hose according to the present invention will now be described on the basis of the preferred embodiment illustrated in the attached drawing. The hose according to the present invention is not limited to the preferred embodiment illustrated in the drawing.

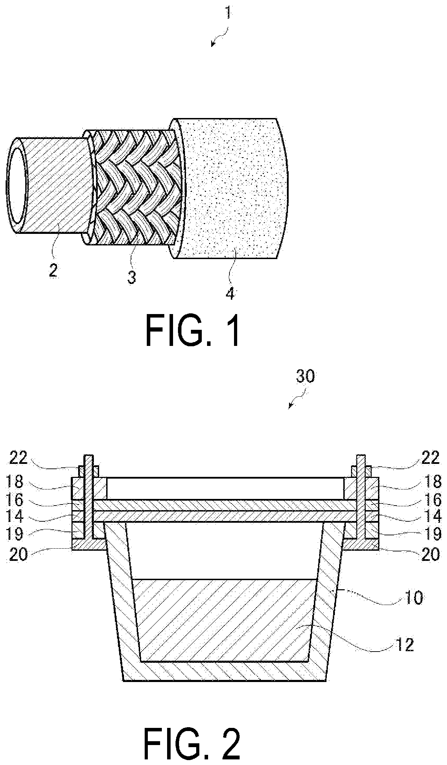

FIG. 1 is a perspective view illustrating a cut-away of the layers of one example of a refrigerant-transporting hose according to the present invention.

In FIG. 1, a refrigerant-transporting hose 1 includes an inner tube 2, a reinforcing layer 3 disposed adjacent to the outer circumferential side of the inner tube 2, and an outer tube 4 disposed adjacent to the outer circumferential side of the reinforcing layer 3.

An example of a preferable aspect is one in which the inner tube 2 of the refrigerant-transporting hose 1 is formed using the rubber composition according to the present invention.

There is no particular limitation on the method used to manufacture the refrigerant-transporting hose according to the present invention. An example is the following method.

First, the inner tube is formed by extruding inner tube material from an inner tube rubber material rubber extruder onto a mandrel to which a release agent has been applied in advance. The inner tube material is preferably the rubber composition according to the present invention.

Next, the reinforcing layer is formed on the inner tube (or adhesive layer if one is present). There is no particular limitation on the method by which the reinforcing layer is formed.

Next, the outer tube is formed by extruding outer tube material onto the reinforcing layer (or adhesive layer in a case that one is present).

The layers can then be bonded via vulcanization at 130 to 190°C for 30 to 180 minutes to manufacture the hose according to the present invention. Examples of vulcanization methods include steam vulcanization, oven vulcanization (dry heat vulcanization), and hot water vulcanization.

The hose according to the present invention is a refrigerant-transporting hose. The hose according to the present invention can be used, for example, as a fluid-transporting hose such as a hose for use in air conditioning systems (for example, car air conditioning systems).

Examples

The present invention will now be described in detail by way of examples; however, the present invention is not limited to these examples.

Production of rubber compositions

The components listed in the following Table 1 were kneaded according to the compositions (part by mass) listed therein at 30 to 150°C using a closed mixer to produce rubber compositions.

Preparation of sheets

The rubber compositions produced as described above were vulcanized at 160°C for 30 minutes using a press vulcanizing machine to prepare 0.5 mm-thick sheets.

Evaluation

The following evaluations were performed using the rubber compositions and sheets produced as described above. The results are shown in Table 1.

Refrigerant permeation resistance

The refrigerant permeation resistance evaluation method will now be described using the attached drawings.

FIG. 2 is a cross-sectional view of an evaluation cup used to evaluate the refrigerant permeation resistance of the rubber composition according to the present invention.

In FIG. 2, an evaluation cup 30 includes a stainless steel cup 10 (hereafter referred to as "cup 10"), a sheet 14 prepared as described above, a sintered metal plate 16, fixing members 18, 19, a bolt 20, and a nut 22. The interior of the cup 10 contains refrigerant 12.

First, the cup 10 was filled with refrigerant 12 to half the capacity of the cup 10, the opening of the cup 10 was covered by the sheet 14, and the sintered metal plate 16 was laid over the sheet 14. Next, the end of the cup 10, the sheet 14, and the sintered metal plate 16 were secured with the bolt 20 and the nut 22 via the fixing members 18, 19, and the end of the cup 10, the sheet 14, and the sintered metal plate 16 were brought into tight contact to prepare an evaluation cup 30.

HFO-134a (produced by Daikin Industries) was used as the refrigerant in the examples and comparative examples.

A test was performed in which the evaluation cup prepared as described above was left standing for one day (24 hours) at 100°C.

The weight of the evaluation cup as a whole was measured before and after the test, and post-test weight reduction was calculated.

Post-test weight reduction, etc., were inserted into the following equation to calculate the gas permeation coefficient, and refrigerant permeation resistance was evaluated on the basis of the calculated results.

$$\text{Gas permeation coefficient (mg·mm/day·cm}^2) = (M \times t)/(T \times A)$$

In the equation, M is the weight reduction (mg), t is the thickness (mm) of the sheet, T is test time (day), and A is permeation area ($cm^2$).

Evaluation results indicating a gas permeation coefficient was 2.0 mg·mm/day·$cm^2$ or less were evaluated as indicating very superior refrigerant permeation resistance, designated "A".

A gas permeation coefficient of greater than 2.0 mg·mm/day·$cm^2$ but not greater than 2.4 mg·mm/day·$cm^2$ were evaluated as indicating superior refrigerant permeation resistance, designated "B".

A gas permeation coefficient of greater than 2.4 mg·mm/day·$cm^2$ but not greater than 2.6 mg·mm/day·$cm^2$ were evaluated as indicating good refrigerant permeation resistance, designated "C".

A gas permeation coefficient of greater than 2.6 mg·mm/day·$cm^2$ were evaluated as indicating poor refrigerant permeation resistance, designated "D".

Compression set resistance

First, the rubber compositions produced as described above were vulcanized at 153°C for 45 minutes using a press vulcanizing machine to prepare large test pieces as defined in JIS K 6262.

Next, in accordance with JIS K 6262, the test pieces prepared as described above were compressed 25% and kept at 70°C for 22 hours, followed by removing the pressure and letting the pieces stand at ambient temperature for 30 minutes, after which the compression set rate was measured.

A compression set rate of 35% or less can be considered to indicate superior compression set resistance.

Modulus: M100

The compositions produced as described above were vulcanized at 160°C for 30 minutes using a press vulcanizing machine to mold 2 mm-thick sheets, and dumbbell-shaped test pieces were prepared.

Next, the 100% modulus (tensile stress of the rubber at 100% elongation in a tensile test) of the test pieces prepared as described above was measured at a tensile test speed of 500 mm/min and 23°C in accordance with JIS K 6251.

[TABLE 1]

| Table 1 | Examples | | | | | | | | | Comparative Examples | | |
|---|---|---|---|---|---|---|---|---|---|---|---|---|
| | 1 | 2 | 3 | 4 | 5 | 6 | 7 | 8 | 9 | 1 | 2 | 3 |
| IIR CSM CM | 100 | 100 | 100 | 100 | 100 | 90 10 | 90 10 | 100 | 100 | 100 | 100 | 100 |
| Talc | 90 | 90 | 90 | 90 | 130 | 90 | 90 | 90 | 90 | 90 | 90 | 90 |
| Liquid butyl rubber 1 Liquid butyl rubber 2 | 2 | 5 | 10 | 30 | 5 | 5 | 5 | 2 | 5 | | | |

(continued)

| Table 1 | Examples | | | | | | | | | Comparative Examples | | |
|---|---|---|---|---|---|---|---|---|---|---|---|---|
| | 1 | 2 | 3 | 4 | 5 | 6 | 7 | 8 | 9 | 1 | 2 | 3 |
| Paraffin oil (comparison) Liquid polybutene (comparison) Aromatic oil (comparison) | | | | | | | | | | 5 | 5 | 5 |
| Zinc oxide | 5 | 5 | 5 | 5 | 5 | 5 | 5 | 5 | 5 | 5 | 5 | 5 |
| Resin vulcanizing agent | 5 | 5 | 5 | 5 | 5 | 5 | 5 | 5 | 5 | 5 | 5 | 5 |
| Refrigerant permeation resistance | B | C | C | C | A | C | C | B | C | D | D | D |
| Compression set (%) | 30 | 29 | 29 | 38 | 39 | 30 | 30 | 31 | 31 | 28 | 31 | 29 |
| M100 (MPa) | 6.6 | 6.4 | 6.1 | 5.4 | 6.6 | 6.3 | 6.4 | 6.9 | 6.6 | 6.0 | 6.1 | 6.0 |

The details of the components listed in Table 1 are as follows.

- IIR: butyl rubber, trade name: BUTYL 301; produced by LANXESS; weight average molecular weight: 600000
- CSM: chlorosulfonated polyethylene, trade name: TS-530; manufactured by Tosoh Corporation
- CM: chlorinated polyethylene, trade name: Elaslene 352NA; manufactured by Showa Denko K.K.
- Talc: Mistron Vapor (trade name); manufactured by Imerys Specialties Japan Co., Ltd.

- Liquid butyl rubber 1: trade name: KALENE 800; manufactured by Royal Elastomers; weight average molecular weight: 36000; viscosity: 150000 cP
- Liquid butyl rubber 2: trade name: KALENE 1300; manufactured by Royal Elastomers; weight average molecular weight: 42000; viscosity: 300000 cP

- Paraffin oil (comparison): Machine oil 22; manufactured by Showa Shell Sekiyu K.K.
- Liquid polybutene (comparison): trade name: HV-300; manufactured by JX Nippon Oil & Energy Corp.
- Aroma oil (comparison): trade name: A-OMIX, manufactured by Sankyo Yuka Kogyo K.K.
- Zinc oxide: Zinc Oxide #3, manufactured by Seido Chemical Industry Co., Ltd.
- Resin vulcanizing agent: brominated alkylphenol-formaldehyde resin; Tackirol 250-I; manufactured by Taoka Chemical Co., Ltd.

As is clear from the results shown in Table 1, Comparative Examples 1 to 3, which contained liquid polybutene, paraffin oil, or aroma oil instead of liquid butyl rubber, had low refrigerant permeation resistance.

In contrast, the rubber compositions according to the present invention were confirmed as yielding the desired effects.

A comparison of Examples 1 to 4 in terms of liquid butyl rubber content showed that refrigerant permeation resistance was better as liquid butyl rubber content decreased.

A comparison of Examples 1 to 4 in terms of liquid butyl rubber content also showed that a liquid butyl rubber content of less than 30 parts by mass per 100 parts by mass of the prescribed rubber component yielded better compression set resistance and a higher modulus than when the said content was 30 parts by mass or greater.

A comparison of Examples 2 and 5 in terms of talc content showed that a talc content of less than 130 parts by mass per 100 parts by mass of the prescribed rubber component yielded better compression set resistance than when the said content was 130 parts by mass or greater.

A comparison of Example 2 and Examples 6 and 7 showed that Example 2, which uses only butyl rubber as the rubber component, had less compression set than Examples 6 and 7.

A comparison of Example 1 and Example 8 showed that Example 1, which contained liquid butyl rubber having a weight average molecular weight of 40000 or less, had better compression set resistance than Example 8, which contained liquid butyl rubber having a weight average molecular weight in excess of 40000. A comparison of Examples 2 and 9 yielded similar results.

Reference Signs List

| 1 | Refrigerant-transporting hose |
|---|---|
| 2 | Inner tube |
| 3 | Reinforcing layer |
| 4 | Outer tube |
| 10 | Cup |
| 12 | Refrigerant |
| 14 | Sheet |
| 16 | Sintered metal plate |
| 18, 19 | Fixing member |
| 20 | Bolt |
| 22 | Nut |
| 30 | Evaluation cup |

**Claims**

1. A rubber composition containing:

   a rubber component including at least one selected from the group consisting of chlorosulfonated polyethylene rubber, butyl rubber, and chlorinated polyethylene rubber; and
   liquid butyl rubber, the composition being used to manufacture a refrigerant-transporting hose.

2. The rubber composition according to claim 1, wherein the liquid butyl rubber has a weight average molecular weight of 1000 to 50000.

3. The rubber composition according to claim 1 or 2, wherein the liquid butyl rubber has a viscosity at 90°C of 10000 to 600000 cP.

4. The rubber composition according to any one of claims 1 to 3, wherein a liquid butyl rubber content is 1 to 30 parts by mass per 100 parts by mass of the rubber component.

5. The rubber composition according to any one of claims 1 to 4, wherein the refrigerant includes at least a fluorine-based compound.

6. A refrigerant-transporting hose fabricated using the rubber composition according to any one of claims 1 to 5.

FIG. 1

FIG. 2

## INTERNATIONAL SEARCH REPORT

| | International application No. |
|---|---|
| | PCT/JP2016/069817 |

**A. CLASSIFICATION OF SUBJECT MATTER**
*C08L23/22*(2006.01)i, *C08L23/28*(2006.01)i, *C08L23/34*(2006.01)i, *F16L11/04*(2006.01)i

According to International Patent Classification (IPC) or to both national classification and IPC

**B. FIELDS SEARCHED**

Minimum documentation searched (classification system followed by classification symbols)
C08L23/22, C08L23/28, C08L23/34, F16L11/04

Documentation searched other than minimum documentation to the extent that such documents are included in the fields searched
Jitsuyo Shinan Koho 1922–1996 Jitsuyo Shinan Toroku Koho 1996–2016
Kokai Jitsuyo Shinan Koho 1971–2016 Toroku Jitsuyo Shinan Koho 1994–2016

Electronic data base consulted during the international search (name of data base and, where practicable, search terms used)
CAplus/REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| X | JP 11-159667 A (Denso Corp.),<br>15 June 1999 (15.06.1999),<br>claims; paragraphs [0003], [0004], [0047] to [0058]; examples<br>(Family: none) | 1-6 |
| A | JP 2013-241547 A (Bridgestone Corp.),<br>05 December 2013 (05.12.2013),<br>entire text<br>(Family: none) | 1-6 |
| A | JP 2010-69777 A (Tokai Rubber Industries, Ltd.),<br>02 April 2010 (02.04.2010),<br>entire text<br>(Family: none) | 1-6 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 July 2016 (26.07.16) | 02 August 2016 (02.08.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

**INTERNATIONAL SEARCH REPORT**

International application No.

PCT/JP2016/069817

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2006-29443 A  (Tokai Rubber Industries, Ltd.),<br>02 February 2006 (02.02.2006),<br>entire text<br>& US 2006/0011250 A1<br>entire text | 1-6 |
| A | JP 2003-327750 A  (The Yokohama Rubber Co., Ltd.),<br>19 November 2003 (19.11.2003),<br>entire text<br>(Family: none) | 1-6 |
| A | JP 2003-313433 A  (Kabushiki Kaisha Shin'ei Kogyo),<br>06 November 2003 (06.11.2003),<br>entire text<br>(Family: none) | 1-6 |

Form PCT/ISA/210 (continuation of second sheet) (January 2015)

**REFERENCES CITED IN THE DESCRIPTION**

**Patent documents cited in the description**

- JP 2006029443 A